# EUROPEAN PATENT APPLICATION

(11) **EP 4 027 417 A1**
(43) Date of publication of application: **13.07.2022**
(21) Application number: 21455001.4
(22) Date of filing: 07.01.2021
(51) Int. Cl.: H01M 8/04089, H01M 8/04492, H01M 8/0444, G01R 27/00, G01N 27/26, G01N 27/407, H01M 8/1018

(54) **DUAL PURPOSE SENSOR FOR MEASURING HYDROGEN AND HUMIDITY IN THE ANODE LOOP OF A FUEL CELL SYSTEM**

(71) Applicant: AVL List GmbH, 8020 Graz (AT); AVL Fuel Cell Canada Inc., Burnaby, British Columbia V5A4N8 (CA)
(72) Inventor: Cimenti, Max, North Vancouver, British Columbia V7K1X7 (CA)
(74) Representative: Gamper, Bettina

(57) **Abstract**

A dual purpose sensor comprising at least two electrodes and a solid polymer membrane electrolyte can serve as both a hydrogen sensor and a relative humidity sensor in the anode loop of a fuel cell system. Sensor electronics are used to apply first and second electrical signals across a pair of electrodes in the sensor, and at least one electrical parameter associated with each of the electrical signals are measured.

## Description

This invention relates to sensors form measuring hydrogen concentration and relative humidity specifically for fuel cell systems.

Fuel cells are devices that generate electric power by electrochemically converting fuel and oxidant reactants, such as hydrogen and oxygen or air. A solid polymer electrolyte fuel cell is one type of fuel cell which employs a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). In a common embodiment, the MEA comprises a catalyst coated membrane (CCM) and gas diffusion layers (GDLs) applied on each side of the CCM. The CCM is a convenient subassembly in which appropriate catalyst compositions have been applied and bonded to either side of the membrane electrolyte. The GDLs are provided to improve both the distribution of the fluid reactants to the electrodes and the removal of fluid by-products from the electrodes.

In a typical solid polymer electrolyte fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1V, a plurality of cells is usually stacked together in series for commercial applications in order to provide a higher output voltage. Fuel cell stacks can be further connected in arrays of interconnected stacks in series and/or parallel for use in automotive applications and the like.

Along with water, heat is a significant by-product from the electrochemical reactions taking place within the fuel cell. Means for cooling a fuel cell stack is thus generally required. Stacks designed to achieve high power density (e.g. automotive stacks) typically circulate liquid coolant throughout the stack in order to remove heat quickly and efficiently. To accomplish this, coolant flow fields comprising numerous coolant channels are also typically incorporated in the flow field plates of the cells in the stacks. The coolant flow fields are typically formed on the electrochemically inactive surfaces of both the anode side and cathode side flow field plates and, by appropriate design, a sealed coolant flow field is created when both anode and cathode side plates are mated together into a bipolar flow field plate assembly.

To efficiently manufacture such fuel cell stacks, numerous identical cell assemblies known as unit cell assemblies are usually prepared with an appropriate design such that they can simply be stacked, one on top of the other, to complete most of the assembly of the stack. Special end cell assemblies may be required at the ends of the stack to properly complete the assembly.

As mentioned, hydrogen and air are frequently used as the supplies of fuel and oxidant in typical fuel cell systems. Since air is usually obtained from the ambient environment and is abundant and benign, an excess of air is usually supplied to a cathode inlet of the fuel cell stack and any excess is safely exhausted, along with some water by-product, from a cathode outlet. Hydrogen however is desirably conserved and also cannot generally be exhausted safely to the surrounding environment. Certain fuel cells are thus designed to operate "dead ended" in which there is no anode outlet and supplied hydrogen fuel is instead retained in the fuel cell stack until it is consumed. Occasional purging of such fuel cell anodes is required to remove impurities that otherwise build up unacceptably during operation. More commonly though, and in a like manner to the oxidant, an excess of hydrogen is supplied to an anode inlet of the fuel cell stack and any excess is exhausted at an anode outlet. However, to conserve precious fuel and for safety reasons, the fuel cell system includes an anode loop which fluidly connects the anode outlet to the anode inlet. Excess, unused hydrogen exhausted from the fuel cell stack can thus be recirculated for use again by combining the anode exhaust with a fresh supply of hydrogen fuel. Both the hydrogen concentration and water concentration in the anode exhaust gas can vary though depending on numerous factors. For control purposes then, it can be desirable to monitor both the hydrogen concentration and the relative humidity (or water concentration) in the anode loop.

With regards to hydrogen concentration however, while conventional hydrogen sensors are commonly employed to detect external hydrogen leaks, such sensors are not typically robust to exposure to liquid water conditions or "flooding" which can occur in the anode loop of fuel cell systems and thus are not employed in this regard. Instead, in many systems, the hydrogen concentration may be estimated from mass-balance determinations using various signals such as load, fuel flow rate, H₂ cross-over rate, recirculation ratio, and/or purging frequency. However, such estimates do not necessarily reflect local conditions (e.g. differences between stack inlet vs outlet) and might miss fast transients. For control purposes in a solid polymer electrolyte fuel cell system a hydrogen sensor in the anode loop should be robust to high humidity levels, including "flooding", and at least be able to detect concentrations variations between 100% and 50%. The accuracy requirements for such purposes are not as high as those typically required for other unrelated hydrogen sensing applications.

In a like manner, conventional relative humidity or RH sensors are not commonly employed within the anode subsystem or loop for similar reasons. Here, the average hydration state may instead be estimated by measuring the average high frequency stack resistance. Again however, such measurements do not necessarily reflect local conditions. Again, in a like manner to the hydrogen sensing requirements here, a suitable RH sensor should at least be able to detect variations between 50 % and 100%. And again, the accuracy requirements for such purposes are not as high as those typically required for other unrelated RH sensing applications.

In attempts to provide improvements in this regard, Japanese published patent application JP2005241540 for instance discloses apparatus comprising two different sensors in the same package for use in fuel cell applications. The apparatus comprises both a hydrogen sensor and a different moisture sensor.

As acknowledged in Sandaruwan et al. Article titled "Polyaniline/palladium nanohybrids for moisture and hydrogen detection", Chemistry Central Journal (2018) 12:93*,* it may be desirable in principle to employ a single sensing system to detect both hydrogen and humidity. As further acknowledged therein, this is also generally considered to be quite a challenge. That is because it is believed that such a sensing system should encompass high sensitivity, wide dynamic range, good stability and quick response capability. In some unrelated applications such as the monitoring of transformer oil, this challenge of acceptably measuring both hydrogen and moisture has been overcome, e.g. as disclosed in US9234834.

As disclosed for instance in US7189364, certain electrochemical sensor designs employing solid polymer membrane electrolytes between two appropriate electrodes have been considered for use as hydrogen sensors. Further, as disclosed for instance in US9562872, other electrochemical sensor designs employing solid polymer membrane electrolytes between two appropriate electrodes discloses have been considered for use as humidity sensors based on impedance or resistance measurements.

While a great deal of consideration has gone into developing in solid polymer electrolyte fuel cell system for numerous applications, there remains a continuing need for additional simplification and efficiency in their design and operation. The present invention addresses this need and provides other advantages as disclosed in more detail below.

It has been realized that a sensor based on the construction and, in part, the functioning of electrochemical devices for pumping hydrogen can be used for measuring both hydrogen concentration and relative humidity (RH) in fuel cell system applications. While such sensors may not generally be suitable for measuring these species in the required concentration ranges and to the required accuracy in many unrelated commercial applications, they are acceptable and even advantageous for control purposes in fuel cell systems. Such sensors are robust to the high humidity levels and even "flooding" conditions found in fuel cell applications. And while not as effective or accurate over all possible concentration ranges, they are sufficiently so for use in fuel cell systems.

The fuel cell system of the invention ccomprises a fuel cell stack, fuel and oxidant supplies, an anode loop, and a hydrogen and relative humidity sensor in the anode loop. The fuel cell stack comprises an anode inlet for fuel, an anode outlet, a cathode inlet for oxidant, and a cathode outlet. The fuel supply comprises hydrogen fluidly connected to the anode inlet. The oxidant supply comprises oxygen fluidly connected to the cathode inlet. The anode loop fluidly connects the anode outlet to the anode inlet. And the sensor in the anode loop is a dual purpose sensor serving as both the hydrogen sensor and the relative humidity sensor. This dual purpose sensor is similar in construction to a conventional electrochemical hydrogen pump or compressor, but can be a miniaturized version thereof, and comprises a first electrode exposed to the gases in the anode loop, a second electrode, and a solid polymer membrane electrolyte between the first and the second electrodes. The fuel cell system also comprises sensor electronics capable of applying first and second electrical signals for determining relative humidity and hydrogen concentration respectively across a pair of electrodes in the dual purpose sensor, and measuring at least one electrical parameter associated with each of the first and second electrical signals across the pair of electrodes. The invention is particularly suitable for use in systems in which the fuel cell stack is a solid polymer electrolyte fuel cell stack.

In the dual purpose sensor, the diffusion path for gases through the first electrode is desirably smaller than the diffusion path for gases through the second electrode. In some embodiments, the second electrode is also exposed to the gases in the anode loop. In yet other embodiments however, the second electrode may be isolated from the anode loop gases.

In order to determine hydrogen concentration, the first electrical signal can be a positive DC voltage applied to the second electrode with respect to the first electrode. Suitable electrical signals in this regard include a fixed DC bias, a series of stepped DC biases, or a DC pulse. In such an embodiment, the at least one associated electrical parameter measured is the limiting DC current across the first and second electrodes.

Alternatively, to determine hydrogen concentration, the first electrical signal can instead be an AC voltage of fixed frequency applied between the first and second electrodes. Suitable AC signals in this regard include AC voltages with relatively low frequencies in the range from 1 Hz to 10 Hz. In such an embodiment, the at least one associated electrical parameter measured is the AC current across the first and second electrodes.

In order to determine relative humidity, the second electrical signal can be an AC current of fixed amplitude and frequency applied between the first and second electrodes. Suitable AC signals in this regard include AC voltages with higher frequencies in the range from 1 kHz to 5 kHz. In such an embodiment, the at least one associated electrical parameter measured is the AC voltage across the first and second electrodes.

Embodiments of the invention may also incorporate one or more additional electrodes in the dual purpose sensor to improve performance. For instance, in one such embodiment, the dual purpose sensor can comprise a third electrode in contact with the solid polymer membrane electrolyte and electrically isolated from the first and the second electrodes. In this embodiment, the second electrical signal can now be an AC current of fixed amplitude and frequency applied between the first and third electrodes, and the at least one associated electrical parameter measured is now the AC voltage across the first and third electrodes.

The invention includes related methods of measuring both hydrogen concentration and relative humidity in the anode loop of the aforementioned fuel cell systems. The dual purpose sensor is acceptable for use in the hydrogen concentrations (e.g. in the range from about 100% to 50%) and relative humidities (e.g. also in the range from about 50% to 100%) typical experienced in such systems. Further, the dual purpose sensor can also be acceptable for such applications even if the measuring is accurate to plus or minus 2% or greater in both cases.

These and other aspects of the invention are evident upon reference to the attached Figures and following detailed description.
Figure 1 shows a schematic view of a fuel cell system of the invention.
Figure 2 shows a schematic view of the dual purpose sensor for measuring hydrogen concentration and relative humidity in the fuel cell system of Figure 1.

In this specification, words such as "a" and "comprises" are to be construed in an openended sense and are to be considered as meaning at least one but not limited to just one.

Herein, when referring to an electrode, the phrase "exposed to the gases" is to be interpreted as a direct exposing of the electrode to the relevant gases and that no membrane nor any other permeable or impermeable barrier separates the electrode from those gases.

The term "signal" with reference to either DC or AC signals is to be interpreted broadly and for instance is not to limit to signals comprising a single waveform or having a single amplitude. Rather, it is intended for instance to include signals comprising sets of waveforms, of potentially differing amplitude and/or frequency (the latter in the case of AC signals).

The present invention provides for acceptable direct sensing of both hydrogen concentration and relative humidity for monitoring and control purposes in the anode loops of fuel cell systems. Unlike many conventional sensors which may provide unreliable output when exposed to liquid water, the dual purpose sensor of the present invention is tolerant to exposure to liquid water. Fuel cell systems incorporating such a dual purpose sensor do not need to rely on indirect measurements of these species thereby providing improved robustness to certain failure modes, such as fuel starvation or fuel dry-out.

Contrary to previous thinking, where it was considered difficult to accomplish in practice (as for instance in the aforementioned Sandaruwan et al. article), the present inventors realized that the general typical requirements of high sensitivity, wide dynamic range, and good stability aren't all required for present purposes. The general typical tight accuracies are not however required and the present apparatus is sufficient and provides many desirable advantages.

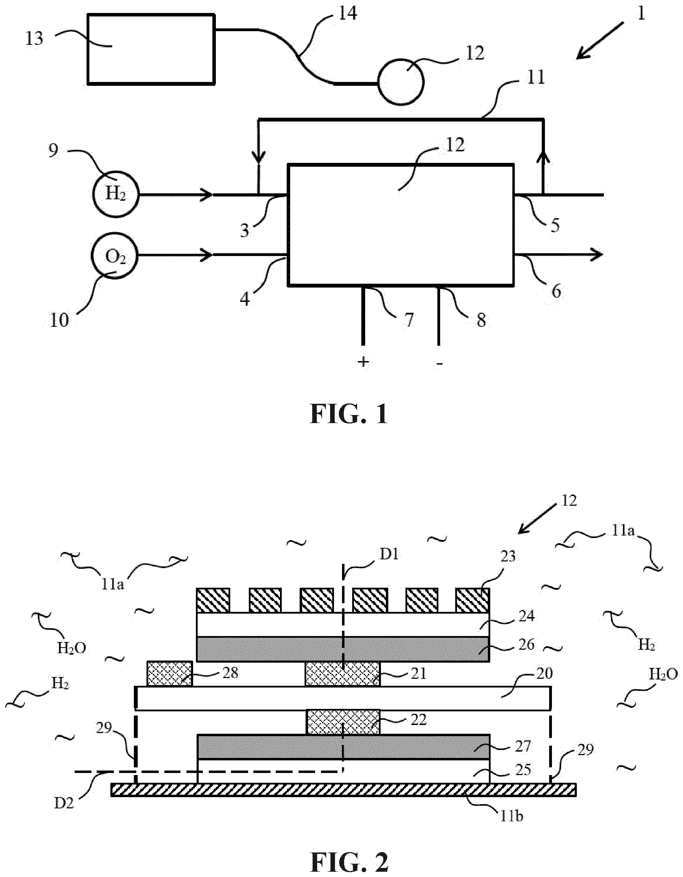

A simplified schematic view of a fuel cell system of the invention is shown in Figure 1. (Note: numerous other subsystems known to those in the art and which are essential and/or desirable for operation are not shown in this highly simplified view for clarity and simplicity.) Fuel cell system 1 includes solid polymer electrolyte fuel cell stack 2 which comprises anode inlet 3, cathode inlet 4, anode outlet 5, cathode outlet 6, positive electrical output 7 and negative electrical output 8. Fuel cell system 1 also includes fuel supply 9 (typically pure hydrogen) fluidly connected to anode inlet 3 and oxidant supply 10 (comprising oxygen and typically is air) fluidly connected to cathode inlet 4. Unused oxidant and much of the by-product water is exhausted from cathode outlet 6. Water may be condensed and/or captured from this oxidant exhaust but ultimately it is typically exhausted to the ambient environment. Exhaust from the anode however is obtained from anode outlet 5 and typically is recycled to the anode inlet 3 again via anode loop 11. In the system of the invention, dual purpose sensor 12 for measuring both hydrogen concentration and relative humidity is located in anode loop 11. Sensor electronics 13 also are included which are capable of applying first and second electrical signals (e.g. DC and/or bidirectional AC perturbation signals at selected frequencies) to dual purpose sensor 12 via sensor input/output lines 14 for determining relative humidity and hydrogen concentration respectively. Simultaneously, sensor electronics 13 also are capable of receiving and measuring output signals from dual purpose sensor 12 via sensor input/output lines 14. These output signals include at least one electrical parameter (e.g. DC and/or AC currents, voltages, or resistances etc.) associated with each of the first and second electrical signals inputted to dual purpose sensor.

A schematic view of dual purpose sensor 12 itself is shown in Figure 2. Along with components common to all embodiments, certain optional features are also depicted in Figure 2. Dual purpose sensor 12 is located within anode loop 11 and can thus be directly exposed to the gases 11a therein. Dual purpose sensor 12 comprises solid polymer electrolyte 20, first electrode 21, and second electrode 22 on opposite sides of electrolyte 20. In the embodiment shown here, electrical connection between sensor input/output lines 14 and second electrode 22 are made via electrically conductive wall 11b of anode loop 11. Electrical connection between sensor input/output lines 14 and first electrode 21 are made via perforated current collector 23. The perforations in current collector 23 allow through-plane access of gases 11a to first electrode 21. Further in the embodiment shown here, dual purpose sensor also comprises optional first and second gas diffusion layers 24 and 25 respectively and first and second microporous layers 26 and 27 respectively. As shown in Figure 2, gas diffusion layers 24, 25 and microporous layers 26, 27 all have the same area and same lateral dimension. First and second electrodes 21 and 22 respectively also have the same area and same lateral dimension. However as shown, gas diffusion layers 24, 25 and microporous layers 26, 27 are much larger and wider in lateral dimension than electrodes 21, 22. As explained below, using different dimensions in this manner allows for the diffusion path lengths for hydrogen to desirably be controlled. Also as is apparent from the schematic in Figure 2, dual purpose sensor 12 appears to be a miniaturized version of a larger hydrogen pump or compressor.

As is well known to those skilled in the art, gas diffusion layers and hydrophobic microporous layers can be used to desirably engineer access of gases to and from the electrodes in such electrochemical sensors and other related electrochemical devices (e.g. fuel cells). For instance, appropriate designs can be used to prevent liquid water from accumulating and subsequently allow the functioning of the dual purpose sensor even when exposed to supersaturated gas. In the embodiment of Figure 2, the (average) diffusion path length of gases through first electrode 21 is relatively short compared to diffusion path length of gases through second electrode 22. This is evident in Figure 2 since gas travelling through first electrode 21 goes through-plane, i.e. through perforated current collector 23, first gas diffusion layer 24, first microporous layer 26 and first electrode 21 as illustrated by dashed line D1. On the other hand, much of the gas travelling through second electrode 22 goes in-plane, i.e. through second electrode 22, second microporous layer 27, and to a great extent in-plane through second gas diffusion layer 25 before merging with gases 11b in anode loop 11 as illustrated by dashed line D2. As explained in more detail below, having different diffusion path lengths through the two electrodes can be advantageous for certain measurements using dual purpose sensor 12.

Other optional features shown in the embodiment of Figure 2 include third electrode 28 which, as explained in more detail below, may be employed to obtain improved performance or capabilities. Further, second electrode 22 may, if desired, be optionally sealingly separated from gases 11a within anode loop 11. This is represented by optional seals 29 in Figure 2 (note: the dashed lines used for seals 29 are not intended to imply porosity or permeability but rather the optional nature of this feature). ]

Although dual purpose sensor 12 is shown located within anode loop 11 but remote from fuel cell stack 2 in Figure 1, the active area of the electrodes in practical dual purpose sensors can be quite small (e.g. mm² scale) which allows it to alternatively be integrated into anode inlet 3 or anode outlet 5 or other fuel ports or manifolds within fuel cell stack 2.

### Method options for measuring [H₂]

In general, dual purpose sensor 12 can be used to determine hydrogen concentration based on a measurement of the sensor's limiting current for hydrogen (e.g. its capability for pumping hydrogen across the hydrogen-ion-conductive solid polymer electrolyte). If the temperature and pressure of the gases 11a are known, [H₂] can be deduced from a measured limiting current. Either DC or AC signals may be applied in order to make this determination.

A preferred approach is to employ a DC signal and involves applying a positive DC voltage to second electrode 22 with respect to first electrode 21 and measuring the limiting current obtained. In principle, a fixed DC bias that is large enough to ensure the limiting current is obtained may be employed. However, if too large a DC bias is applied for too long a time, a re-distribution of water in the solid polymer electrolyte in the sensor due to electro-osmotic drag may occur. In turn, this could lead to a systematic error in the estimate of the gas RH (possibly giving a lower value than actual depending on the DC current density applied, the duration of the DC step. and the gas RH). Thus, it can be desirable to instead increasingly step the applied DC voltage or apply a transient polarization profile in order to minimize any such effects.

In embodiments in which both first and second electrodes are exposed to the same gases 11a, e.g. in embodiments without optional seals 29 as per Figure 2, in order to obtain a proper approximation of limiting current, the diffusion path length D2 through second electrode 22 should be significantly longer than diffusion path length D1 through first electrode D1. The limiting current for hydrogen pumping for electrode 22 can be adjusted by engineering the effective diffusion path length D2. By doing so, the value of the current where such limiting current occurs can be adjusted to be within a range that is easily measurable, simultaneously minimizing the water redistribution effects mentioned above. The design of dual purpose sensor 12 achieves this as explained above.

In alternative embodiments involving a sealed electrode, e.g. in embodiments having optional seals 29 as per Figure 2, it is possible to measure the limiting current of the sealed electrode and to deduce the hydrogen concentration from the limiting current signal if the hydrogen permeation characteristics through the solid polymer electrolyte are known. In these alternative embodiments, the diffusion path length D2 is essentially infinite because second electrode 22 is of course sealed from gases 11a. Hydrogen can now reach second electrode 22 only through solid polymer electrolyte 20 at a rate proportional to its hydrogen permeability. (In this alternative embodiment, hydrogen permeation will occur throughout solid polymer electrolyte 20 including the areas adjacent electrodes 21, 22. Here however the hydrogen pumping current involved is expected to be very low (possibly 3 orders of magnitude lower) compared to that in an embodiment when electrodes 21, 22 are exposed to the same gases. In this alternative embodiment, the diffusion path of second gas diffusion layer 25 is irrelevant because the only functionality associated with it and of associated microporous layer 27 is as a current collector. Hydrogen flow to second electrode 22 is now limited by the permeability of hydrogen through solid polymer electrolyte 20. As soon as hydrogen reaches second electrode 22, it is pumped back to first electrode 21. Because the permeation is low (depending on the thickness and hydration state of solid polymer electrolyte 20), the evolution of hydrogen on first electrode 21 is not expected to significantly affect measurements.

It is also possible to measure the limiting current and thus determine [H₂] based on an applied AC signal. For instance, the current and/or voltage responses of both electrodes 21, 22 can be measured when an AC perturbation of relatively small amplitude is applied at a fixed relatively lower frequency (e.g. 1 to 10Hz). An advantage of an AC signal based approach is that with this approach a hydrogen concentration signal can be monitored in an almost continuous manner. When using such an AC method, the signal amplitude employed should be relatively small (e.g. of order as that used to measure RH below).

In an alternative approach however, an AC signal of significantly larger amplitude may be applied to induce a non-linear response in the observed current-voltage plot and by measuring the magnitude of measured impedance.. Here, instead of deducing limiting current just from a point when deviation from linearity occurs as above, limiting current may instead be deduced based on the entire transient response obtained. Limiting current can then be deduced from the deviation from linearity in an obtained current-voltage (i-V) plot.

In yet another approach, a single current pulse may be applied instead and the response analyzed to deduce limiting current. This more approximates determination using a DC signal and would be expected to require the use of larger amplitudes for the AC pulse signal. As with DC measurements, large amplitude AC signals may alter the hydration state of the solid polymer electrolyte and adversely affect the accuracy of RH measurements using the same sensor.

### Method options for measuring RH

In general, dual purpose sensor 12 can also be used to determine relative humidity (RH) by measuring the high frequency resistance of the sensor. AC currents with frequencies in the range from about 1 kHz to 5 kHz are suitable for such measurements. The high frequency resistance of the sensor includes contributions from optional diffusion and microporous layers 25 through 27, current collectors 11b, 23 and the proton-resistance component (R_{H+}) of solid polymer electrolyte 20 in dual purpose sensor 12. While the former contributions remain essentially unchanged with RH, R_{H+} varies as a function of the state of hydration of the electrolyte and hence of the RH of the gases it is in contact with. Thus, RH can be readily be determined based on a previously determined calibration curve for the sensor and the measured high frequency resistance. It should be noted that the amplitude of the applied AC signal should be kept to a minimum in order to avoid perturbing the hydration state of the electrolyte.

Such high frequency AC measurements are relatively fast. However, a modest delay in hydration and de-hydration of the electrolyte may be expected with changing RH state of the measured gases. Nonetheless, a quasi-real time indication of RH can still be determined in this way. Further, rapid changes (e.g. step jumps) in RH can still be detected by monitoring the rate of change of the high frequency resistance signal versus time. If higher accuracy is needed at RH > 80%, where the calibration curve is expected to be rather flat, the AC current can be directed between the first and second electrodes to amplify the high frequency resistance signal (although a different calibration curve would be needed in such a case).

In a likely preferred embodiment, a DC signal is provided for measuring hydrogen concentration and an AC signal is applied for measuring RH. Such an approach is expected to be easier to implement in practice and to be a more robust approach.

While it may be adequate for monitoring and control purposes to perform relatively rapid, sequential measurements of [H₂] and RH, simultaneous measurement of both is also possible in embodiments of the invention. For instance, simultaneous measurement may be achieved by simultaneously applying multiple sine wave signals containing at least 2 frequencies, e.g. a high frequency signal for RH and a low frequency for [H2], and then measuring and analyzing the complex response obtained. In an alternative preferred approach which can simplify analysis, a third electrode may be incorporated in dual purpose sensor 12, e.g. third electrode 28 in Figure 2. In this embodiment for instance, an AC signal may be applied between first electrode 21 and third electrode 28 to measure RH. And either a DC signal or a different AC signal may be applied between first electrode 21 and second electrode 22 to measure [H₂].

Via use of the aforementioned dual purpose sensor, system parts count, size, complexity, and cost can be reduced. And as further benefits, the dual purpose sensor provides improved robustness to wet conditions and allows quasi-real time readings of both hydrogen concentration and RH to be achieved.

While particular elements, embodiments and applications of the present invention have been shown and described, it will be understood, of course, that the invention is not limited thereto since modifications may be made by those skilled in the art without departing from the spirit and scope of the present disclosure, particularly in light of the foregoing teachings. Such modifications are to be considered within the purview and scope of the claims appended hereto.

## Claims

1. A fuel cell system (1) comprising:
a fuel cell stack (29), in particular a solid polymer electrolyte fuel cell stack (2), comprising an anode inlet (39) for fuel, an anode outlet (59), a cathode inlet (4) for oxidant, and a cathode outlet (6);
a fuel supply (9) comprising hydrogen fluidly connected to the anode inlet;
an oxidant supply (10) comprising oxygen fluidly connected to the cathode inlet;
an anode loop (11) fluidly connecting the anode outlet to the anode inlet;
a hydrogen sensor in the anode loop; and
a relative humidity sensor in the anode loop;
**characterized in that**:
a dual purpose sensor (12) serves as both the hydrogen sensor and the relative humidity sensor, wherein the dual purpose sensor comprises:
a first electrode (21) exposed to the gases (11a) in the anode loop;
a second electrode (22); and
a solid polymer membrane electrolyte (20) between the first and the second electrodes; and
the fuel cell system comprises sensor electronics (13) capable of:
applying first and second electrical signals for determining relative humidity and hydrogen concentration respectively across a pair of electrodes in the dual purpose sensor; and
measuring at least one electrical parameter associated with each of the first and second electrical signals across the pair of electrodes.

2. The fuel cell system of claim 1 wherein the diffusion path D1 for gases through the first electrode is smaller than the diffusion path D2 for gases through the second electrode.

3. The fuel cell system of claim 1 or 2 wherein the second electrode is exposed to the gases in the anode loop.

4. The fuel cell system of one of the previous claims wherein:
the first electrical signal is a positive DC voltage applied to the second electrode with respect to the first electrode; and
the at least one associated electrical parameter measured is the limiting DC current across the first and second electrodes.

5. The fuel cell system one of the previous claims wherein:
the first electrical signal is an AC voltage of fixed frequency applied between the first and second electrodes; and
the at least one associated electrical parameter measured is the AC current across the first and second electrodes; and
in particular wherein the AC voltage frequency of the first electrical signal is in the range from 1 Hz to 10 Hz.

6. The fuel cell system of one of the previous claims wherein:
the second electrical signal is an AC current of fixed amplitude and frequency applied between the first and second electrodes; and
the at least one associated electrical parameter measured is the AC voltage across the first and second electrodes;
and
in particular wherein the AC current frequency of the second electrical signal is in the range from 1 kHz to 5 kHz.

7. The fuel cell system one of the previous claims wherein the dual purpose sensor comprises a third electrode (28) in contact with the solid polymer membrane electrolyte and electrically isolated from the first and the second electrodes.

8. The fuel cell system of claim 7 wherein:
the second electrical signal is an AC current of fixed amplitude and frequency applied between the first and third electrodes; and
the at least one associated electrical parameter measured is the AC voltage across the first and third electrodes.

9. A method of measuring both hydrogen concentration and relative humidity in the anode loop of the fuel cell system of claim 1 comprising:
applying first and second electrical signals for determining relative humidity and hydrogen concentration respectively across a pair of electrodes in the dual purpose sensor; and
measuring at least one electrical parameter associated with each of the first and second electrical signals across the pair of electrodes.

10. The method of claim 9 wherein the concentration of hydrogen is in the range from 100% to 50%, in particular wherein the measuring of the hydrogen concentration is accurate to plus or minus 2% or greater.

11. The method of claim 10 wherein the relative humidity is in the range from 50% to 100%, in particular wherein the measuring of the relative humidity is accurate to plus or minus 2% or greater.

12. The method of claim 11 or 10 comprising:
applying a first electrical signal comprising a positive DC voltage to the second electrode with respect to the first electrode; and
measuring the limiting DC current across the first and second electrodes.

13. The method of one of the claims 11 to 12 comprising:
applying a first electrical signal comprising an AC voltage of fixed frequency applied between the first and second electrodes; and
measuring the AC current across the first and second electrodes.

14. The method of one of the claims 11 to 13 comprising:
applying a second electrical signal comprising an AC current of fixed amplitude and frequency between the first and second electrodes; and
measuring the AC voltage across the first and second electrodes.

15. The method of one of the claims 11 to 14 wherein the dual purpose sensor comprises a third electrode in contact with the solid polymer membrane electrolyte and electrically isolated from the first and the second electrodes and the method comprises:
applying a second electrical signal comprising an AC current of fixed amplitude and frequency between the first and third electrodes; and
measuring the AC voltage across the first and third electrodes.
